# EUROPÄISCHE PATENTSCHRIFT

(11) **EP 4 033 445 B1**
(45) Veröffentlichungstag und Bekanntmachung des Hinweises auf die Patenterteilung: **23.07.2025**
(21) Anmeldenummer: 22162726.8
(22) Anmeldetag: 11.05.2017
(51) Int. Cl.: G06T 5/50

(54) **VERFAHREN ZUR WIEDERGABE VON BILDSEQUENZEN UND BILDVERARBEITUNGSEINHEIT SOWIE COMPUTERPROGRAMM HIERZU**
METHOD FOR REPRODUCING SEQUENCES OF IMAGES AND IMAGE PROCESSING UNIT AND COMPUTER PROGRAMME FOR THE SAME
PROCÉDÉ DE REPRODUCTION DE SÉQUENCES D'IMAGES ET UNITÉ DE TRAITEMENT D'IMAGES, AINSI QUE PROGRAMME INFORMATIQUE ASSOCIÉ

(30) Priorität: 11.05.2016 DE 102016108693
(43) Veröffentlichungstag der Anmeldung: 27.07.2022
(62) Teilanmeldung aus: 17170694.8
(73) Patentinhaber: Dream CHIP Technologies GmbH, 30827 Garbsen (DE)
(72) Erfinder: Fiedler, Martin, 30655 Hannover (DE); Hesselbarth, Sebastian, 22769 Hamburg (DE); Schewior, Gregor, 30171 Hannover (DE); Volkers, Hans, verstorben (DE)
(74) Vertreter: Platzöder Patentanwaltsgesellschaft mbH

(56) Entgegenhaltungen:
- US-A1- 2008 068 359
- US-A1- 2010 103 089
- GUILLAUME FORBIN ET AL: "Nonlinear Flicker Compensation for Archived Film Sequences Using Motion-Compensated Graylevel Tracing", IEEE TRANSACTIONS ON CIRCUITS AND SYSTEMS FOR VIDEO TECHNOLOGY, INSTITUTE OF ELECTRICAL AND ELECTRONICS ENGINEERS, vol. 18, no. 6, 1 June 2008 (2008-06-01), pages 803 - 816, XP011204596, ISSN: 1051-8215

## Beschreibung

Die Erfindung betrifft ein Verfahren zur Wiedergabe von Bildsequenzen mit flackernden Lichtinformationen, wobei eine Bildsequenz eine Folge von Bildern einer zeitlich hintereinander erfassten Bildszene umfasst gemäß dem unabhängigen Anspruch 1.

Die Erfindung betrifft weiterhin eine Bildbearbeitungseinheit und ein Computerprogramm zur Durchführung des Verfahrens gemäß den unabhängigen Ansprüchen 6 und 8.

Zur Kodierung von Bilddaten ist es aus dem ISO/IEC-Standard 11172-2, "Information technology - Coding of moving pictures and associated audio for digital storage media at up to about 1,5 Mbit/s - Part 2: Video" bekannt, eine Bewegungsschätzung mit der Berechnung von Bewegungsvektoren durchzuführen. Damit wird die Effizienz der Vorhersage von Pel-Werten verbessert. Hierzu ist im Encoder nach der Bildumgruppierung ein Bewegungsschätzer nachgeschaltet. Prinzipiell wird für die Schätzung von Bewegungsvektoren geprüft, welche Bildblöcke in aufeinander folgenden Bildern einer Bildsequenz am besten aufeinander passen. Hierzu wird der kleinste Fehler beim Vergleich von zwei Bildblöcken aufeinander folgender Bilder gesucht und der räumliche Versatz zwischen den am besten passenden Bildblöcken als Bewegungsvektor angenommen. Zur Reduzierung des Rechenaufwandes wird ein Suchraum festgelegt. Diese Verfahren zur Bewegungsschätzung sind im Detail im Kapitel D.6.2 des ISO/IEC-Standards 11172-2 beschrieben.

Der MPEG-4 Standard ISO/IEC 14496-10: "Coding of audiovisual objects - Part 10: Advanced Video Coding" beschreibt die Kodierung von Objekten, wobei auch hier eine Bewegungsschätzung der Luminanz-Information vorgenommen wird.

Weitere Verfahren zur Bewegungsschätzung sind aus dem Bereich der Phasenkorrelation, des optischen Flusses (z.B. Lucas Kanade Verfahren) und dem Bereich der zeitlich-örtlichen rekursiven Suche (3DRS) bekannt. Ziel solcher Verfahren zur Bewegungsschätzung ist es, so genau wie möglich die Bewegungen aller Bildinhalte bis hin zu einzelnen Bildpunkten von einem zum anderen Bild in Vorwärts- und/oder Rückwärtsrichtung zu schätzen.

US 8,922,706 B2 beschreibt ein Bildaufzeichnungssystem mit einem Bildsensor, einer Lichtquelle und einer Datenverarbeitungseinheit. Zur Beseitigung von Lichtflackern, das durch Helligkeitsveränderungen im Umgebungslicht verursacht wird, ist eine Synchronisation der Beleuchtung durch die Lichtquelle mit der Bildaufzeichnung vorgesehen. Die Aufzeichnung aufeinander folgender Bilder erfolgt in Intervallen der Helligkeitsvariation des Umgebungslichtes. Es ist damit eine aktive Ausleuchtung der aufzunehmenden Umgebung erforderlich.

Aus FORBIN, G. and VLACHOS, T.: "Nonlinear Flicker Compensation for Archived Film Sequences Using Motion-Compensated Graylevel Tracing", IEEE Transactions on Circuits and Systems for Video Technology, Institute of Electrical and Electronics Engineers, Bd. 18, Nr. 6, Juni 2008, Seiten 803-816, ist ein Verfahren zur Restaurierung von in Filmarchiven archivierten Filmsequenzen bekannt, das eine Bewegungskompensation nutzt. Das Verfahren dient zur Beseitigung bzw. Abschwächung von Bildfehlern, welche durch eine ungleichmäßige Belichtung des Filmmaterials, durch mehrfaches Kopieren des Filmmaterials, durch Staub oder durch Alterungsprozesse des Filmmaterials verursacht sein können.

Aus US 2010/103089 A1 ist ein Verfahren bekannt, mit dem Helligkeitsschwankungen in der Hintergrundbeleuchtung eines LCD-Displays kompensiert werden können.

Aus US 2008/068359 A1 ist ein Verfahren bekannt, mit dem eine Bewegungsunschärfe kompensiert werden kann, die prinzipbedingt bei der Anzeige auf LCD-Displays, Plasma-Displays und ähnlichen Displays entsteht.

Bei der Bildaufzeichnung von Bildsequenzen, die von Leuchtdioden emittiertes Licht beinhalten, kommt es zu Bildern abwechselnd mit Lichtinformationen der LED-Lichtquelle und ohne Lichtinformationen. Dies liegt darin begründet, dass LED-Lichtquellen mit hoher Frequenz ein- und ausgeschaltet werden. Wenn die Bildaufzeichnungseinheit nicht mit der Lichtquelle synchronisiert ist, dann ist die aufgenommene und dargestellte Bildinformation unter Umständen unvollständig.

Dies ist insbesondere kritisch, wenn eine elektronische Kamera die Funktion des Rückfahrspiegels in einem Kraftfahrzeug übernimmt und das aufgezeichnete Bild nach der Bildverarbeitung auf einem Display angezeigt wird. Dann kann es durch die fehlende Synchronisation der Bildsequenzaufzeichnung mit der Kamera mit den Lichtquellen der Umgebung dazu kommen, dass z.B. ein Blinker eines Fahrzeuges in der Umgebung nicht wiedergegeben wird. Dies liegt dann darin begründet, dass Bilder während der Leuchtphase des Blinkers in den für das menschliche Auge nicht sichtbaren aber vorhandenen Austastintervallen des Blinkers aufgenommen werden.

Dies ist allerdings nur ein Beispiel für die Probleme, die durch flackernde Lichtinformationen im Zusammenhang mit dem Einsatz von Kameras in Kraftfahrzeugen hervorgerufen werden. Kameras, die in Kraftfahrzeuge integriert sind, d.h. Fahrzeugkameras, werden in Kraftfahrzeugen für eine Vielzahl von Aufgaben eingesetzt. Sie dienen z. B. als Frontkameras, als Rückkameras bzw. Rückfahrkameras oder als Seitenkameras zur Beobachtung des Fahrzeugumfelds durch den Fahrer. Sie fungieren aber in der Form von Monokameras oder Stereokameras als optische Sensoren, die zur Ermittlung von Sensordaten für Fahrerassistenzsysteme wie Notbremsassistenzsysteme, Abstands- und Spurhalteassistenzsysteme und andere Assistenzsysteme genutzt werden. Im Zusammenhang mit solchen in Kraftfahrzeuge integrierten Kameras kann die unvollständige und/oder fehlerhafte Wiedergabe von Bildsequenzen, die flackernde Lichtinformationen aufweisen, zu einem erhöhten Unfallrisiko führen.

Aufgabe der vorliegenden Erfindung ist es daher, ein verbessertes Verfahren zur Wiedergabe von Bildsequenzen mit flackernden Lichtinformationen zu schaffen, bei dem die Lichtinformationen ohne Synchronisation der Bildaufzeichnung mit einer Leuchtquelle zuverlässig in der wiederzugebenden Bildsequenz enthalten ist.

Die Aufgabe wird durch das Verfahren mit den Merkmalen des Anspruchs 1 sowie durch die zur Durchführung des Verfahrens ausgebildete Bildverarbeitungseinheit mit den Merkmalen des Anspruchs 6 und das Computerprogramm mit den Merkmalen des Anspruchs 8 gelöst. Vorteilhafte Ausführungsformen sind in den Unteransprüchen beschrieben.

Zur Wiedergabe von Bildsequenzen mit flackernden Lichtinformationen wird vorgeschlagen, ein Ausgangsbild durch Mischen der Bilddaten des ersten Eingangsbildes mit den Bilddaten der Zwischenbilder zu generieren, wobei für die Luminanz-Pixel die entsprechenden Ausgangs-Bildpixel als Mittelwert des Maximalwertes der Zwischenbilder und des ersten Eingangsbildes und des Median der Pixel dieser Bilder genutzt werden.

Für die Chrominanz-Pixel können die entsprechenden Ausgangs-Bildpixel als Mittelwert der entsprechenden Pixel aus den Zwischenbildern und dem ersten Eingangsbild berechnet werden.

Unter einer flackernden Lichtinformation wird verstanden, dass die Lichtquelle periodisch ihre Helligkeit verändert, wie dies bei der Ansteuerung von gepulsten LED-Lichtquellen der Fall ist.

Es erfolgt ein Schätzen der Bewegungsvektoren für Bilddaten für ein aufgenommenes erstes Eingangsbild in Bezug auf diese Bilddaten in einem zeitlich vorhergehenden und zeitlich nachfolgenden Eingangsbild. Dieses erste Eingangsbild wird dann mit den mittels der geschätzten Bewegungsvektoren bewegungskompensierten Bilddaten des zeitlich vorhergehenden bzw. zeitlich nachfolgenden Eingangsbildes zur Erzeugung eines zum ersten Eingangsbild zeitlich passenden Ausgangsbildes gemischt.

Es werden somit die aufgenommenen Eingangsbilder einer Bildsequenz mit einer Bewegungskompensation miteinander kombiniert, um aus mehreren Eingangsbildern ein Ausgangsbild zu mischen. Hierbei wird eine kombinierte Vorwärts- und Rückwärts-Bewegungsschätzung zu zeitlich vorhergehenden und zeitlich nachfolgenden Eingangsbildern vorgenommen.

Dabei wird ein guter Ausgleich von Helligkeitsschwankungen zwischen Bildern erreicht (Deflicker-Performance). Artefakte können hierdurch verringert werden.

Die Bilddaten, für die Bewegungsvektoren geschätzt werden, können bspw. Bildblöcke in einem Bild sein. Ein Bewegungsvektor beschreibt dann den räumlichen Versatz eines Ankerpunktes für einen Bildblock in einem zeitlich vorhergehenden oder zeitlich nachfolgenden Bildrahmen der Bildsequenz.

Wie eingangs bereits erläutert wurde, können durch flackernde Lichtinformationen in Bildsequenzen, die von Fahrzeugkameras erzeugt worden sind, Sicherheitsrisiken, z. B. durch eine erhöhte Unfallgefahr, ausgehen, wenn die Bildsequenzen wegen der flackernden Lichtinformationen fehlerhaft oder unvollständig im Fahrzeug wiedergegeben werden.

Vorteilhaft kann das erfindungsgemäße Verfahren daher in einem Kraftfahrzeug ausgeführt werden.

In einer vorteilhaften Ausführungsform kann das erfindungsgemäße Verfahren insbesondere durch eine Bildverarbeitungseinheit ausgeführt werden, die in ein Kraftfahrzeug integriert ist. Das erfindungsgemäße Verfahren kann dabei insbesondere von einer Datenverarbeitungseinheit ausgeführt werden, die Bestandteil der Bildverarbeitungseinheit ist oder mit dieser verbunden ist. Die Bildsequenz kann insbesondere eine von einer in das Kraftfahrzeugzeug integrierten Kamera erzeugte Bildsequenz sein. Die in das Kraftfahrzeugzeug integrierte Kamera ist dabei Bestandteil der Bildverarbeitungseinheit oder ist an die Bildverarbeitungseinheit angeschlossen.

Eine solche in das Kraftfahrzeug integrierte Kamera wird auch als Fahrzeugkamera bezeichnet. Eine solche in das Fahrzeug integrierte Kamera kann insbesondere eine Frontkamera, eine Rückkamera, eine Rückfahrkamera, eine Seitenkamera oder eine andere in das Fahrzeug integrierte Kamera sein. Eine solche in das Fahrzeug integrierte Kamera kann insbesondere eine Kamera sein, welche dem Fahrer zur Beobachtung des Fahrzeugumfelds dient. Eine solche in das Fahrzeug integrierte Kamera kann insbesondere auch eine Monokamera oder eine Stereokamera sein, welche als optischer Sensor zur Ermittlung von Sensordaten für ein oder mehrere Fahrerassistenzsysteme des Kraftfahrzeugs dient.

Eine derartige Ausführungsform des erfindungsgemäßen Verfahrens ist besonders vorteilhaft, weil dadurch die oben genannten Sicherheitsrisiken im Umfeld des Einsatzes von Kameras in Kraftfahrzeugen verringert oder sogar vollständig beseitigt werden können. Dies ist von besonderer Bedeutung, da LEDs, die flackernde Lichtinformationen verursachen, eine immer größere Verbreitung im Fahrzeugumfeld finden.

Die flackernden Lichtinformationen können daher insbesondere flackernde Lichtinformationen sein, die durch von Leuchtdioden emittiertes Licht hervorgerufen werden.

Die Bildverarbeitungseinheit hat Datenspeicher zum Abspeichern von Bilddaten und eine Datenverarbeitungseinheit. Die Datenverarbeitungseinheit ist dann bspw. mittels geeigneter Programmierung oder in Hardware als ASIC, FPGA oder ähnliches zur Durchführung des Verfahrens ausgebildet. Hierzu erfolgt ein Zugriff auf die in dem Datenspeicher abgespeicherten Bilddaten.

Die Bildverarbeitungseinheit kann zusätzlich eine Kamera umfassen oder an eine Kamera angeschlossen werden, welche die digitalen Bilddaten einer Bildsequenz zur weiteren Verarbeitung liefert. Die Bildverarbeitungseinheit kann weiterhin an einen Bildschirm angeschlossen werden, um die generierten Ausgangsbilder einer Bildsequenz anzuzeigen.

In einer vorteilhaften Ausführungsform der Erfindung ist die Bildverarbeitungseinheit und/oder eine Kamera, die Bestandteil der Bildverarbeitungseinheit ist oder an die Bildverarbeitungseinheit angeschlossen ist, in einem Kraftfahrzeug integriert.

Auf diese Weise ist es vorteilhaft möglich, das erfindungsgemäße Verfahren im Kraftfahrzeug zu nutzen und die oben genannten Sicherheitsrisiken im Umfeld des Einsatzes von Kameras in Kraftfahrzeugen zu verringern oder sogar vollständig zu beseitigen.

Die Erfindung wird nachfolgend anhand von Ausführungsbeispielen mit den beigefügten Zeichnungen beispielhaft näher erläutert. Es zeigen:
- Figur 1 -: Skizze eines nicht erfindungsgemäßen Verfahrens zur Wiedergabe von Bildsequenzen mit flackernden Lichtinformationen;
- Figur 2 -: Skizze einer ersten Ausführungsform des Verfahrens;
- Figur 3 -: Skizze einer zweiten Ausführungsform des Verfahrens;
- Figur 4 -: Blockdiagramm einer Bildverarbeitungseinheit zur Durchführung des Verfahrens.

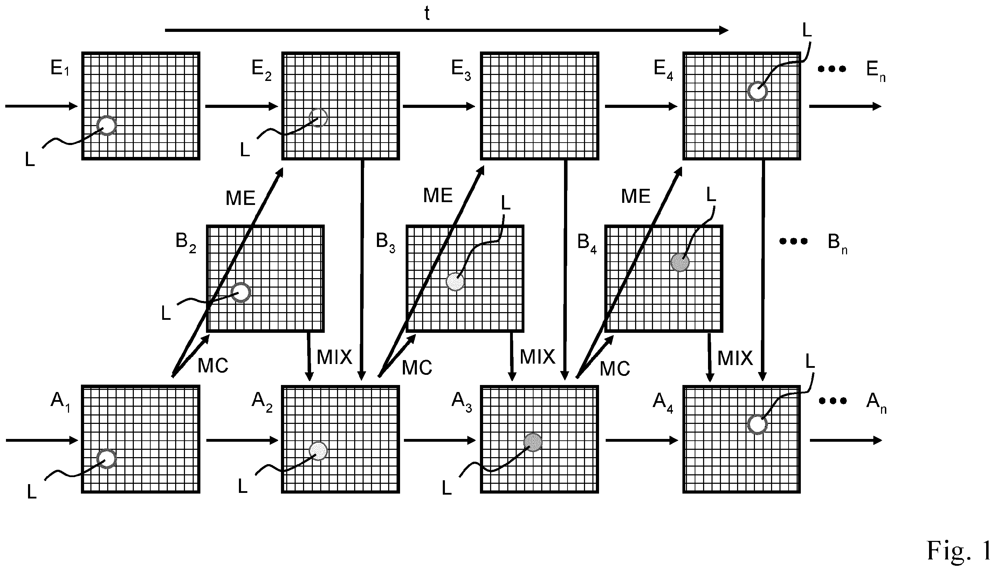

Figur 1 zeigt eine Skizze eines nicht erfindungsgemäßen Verfahrens zur Wiedergabe von Bildsequenzen mit flackernden Lichtinformationen. Erkennbar ist, dass eine Bildsequenz mit in der Zeit t zeitlich hintereinander erfassten Eingangsbildern E₁, E₂, E₃, E₄, ..., Eₙ vorhanden ist. Diese Eingangsbilder können bspw. von einer digitalen Bildkamera aufgenommen worden sein und in einem Datenspeicher zwischengespeichert werden.

Unter "zeitlich aufeinander folgend" wird im Sinne der vorliegenden Erfindung nicht notwendiger Weise verstanden, dass zwei Bilder einer Bildsequenz unmittelbar hintereinander aufgenommen sein müssen. Denkbar ist, dass auch Zwischenbilder, die nicht weiter verarbeitet werden, vorhanden sind. Es muss nur ein verhältnismäßig kurzer Zeitraum hinter den Bildern einer Bildsequenz vorhanden sein, damit die Bildsequenz mit den tatsächlichen Bildbewegungen und Bildinformationen noch gut wahrnehmbar wiedergegeben werden kann.

Aus diesen Eingangsbildern E₁, ..., Eₙ der Bildsequenz werden Ausgangsbilder A₁, A₂, A₃, A₄, ..., Aₙ generiert, die direkt oder nach einer Weiterverarbeitung auf einem Bildschirm wiedergegeben werden.

Es ist nun in der ersten Ausführungsform des Verfahrens vorgesehen, dass eine Bewegungsschätzung ME von Bildinformationen eines Ausgangsbildes Aᵢ mit i = 1, 2, 3, 4, n zu einem zeitlich versetzten Eingangsbild Eᵢ₊₁ (oder gegebenenfalls auch Eᵢ₋₁) der Eingangs-Bildsequenz vorgenommen wird. Hier wird mit den an sich bekannten Verfahren der Bewegungsschätzung für Bildinformationen festgestellt, inwieweit diese von dem Ausgangsbild Aᵢ zum Vergleichsbild Eᵢ₊₁ räumlich versetzt sind. Hierzu kann bspw. anhand der Luminanz-Informationen die räumliche Verschiebung von als Lichtinformationen detektierten Objekten überprüft werden, um für diese Lichtpunkte L Bewegungsvektoren zu ermitteln. Denkbar ist aber auch, dass Bewegungsvektoren für Bildblöcke der Bilder ermittelt werden.

Für die Bewegungsschätzung wird geprüft, welche Bildinformationen im Vergleichsbild am besten mit den Bildinformationen des Ausgangsbildes übereinstimmen.

Mit dem mindestens einen ermittelten Bewegungsvektor erfolgt dann eine Bewegungskompensation des Ausgangsbildes Aᵢ, um tatsächlich ein reales Zwischenbild Bᵢ₊₁ zu berechnen oder dieses als virtuelles Zwischenbild direkt mit dem nachfolgenden Schritt des Mischens dieses Zwischenbildes Bᵢ₊₁ mit dem zugehörigen Eingangsbild Eᵢ₊₁ zu mischen.

Erkennbar ist, dass so ein zeitlich versetztes Ausgangsbild Aᵢ₊₁ durch Mischen des bewegungskompensierten vorhergehenden Ausgangsbildes Aᵢ mit dem zeitlich nachfolgenden Eingangsbild Eᵢ₊₁ erzeugt wird.

Eine solche generierte Abfolge von Ausgangsbildern Aᵢ mit i = 1 ..., n kann dann unmittelbar auf einem Bildschirm ausgegeben werden.

Deutlich wird, dass durch das Mischen die zunächst noch vollständig erhaltene Lichtinformation L aus dem Ausgangsbild nach Bewegungsschätzung mit der im nachfolgenden Eingangsbild Eᵢ₊₁ vorhandenen Lichtinformation L vermischt (interpoliert) wird. Die Lichtinformation im zeitlich nachfolgenden Ausgangsbild Aᵢ₊₁ ist dann zwar etwas abgeschwächt, aber immer noch vorhanden. Dies wird insbesondere anhand des dritten Ausgangsbildes A₃ deutlich, wo die abgeschwächte Lichtinformation L grau schattiert dargestellt ist. Die bereits etwas abgeschwächte Lichtinformation L aus dem vorhergehenden Ausgangsbild A₂ wird dabei mit dem dritten Eingangsbild E₃ gemischt, in der die Lichtinformation aufgrund des Flackerns nicht sichtbar ist. Dennoch ist die Lichtinformation in der Bildsequenz immer zumindest teilweise erkennbar und optisch aufgrund der Abfolge der Bilder in der Bildsequenz mit ihrer tatsächlichen Bewegung in dem Bild sichtbar.

Damit wird auf einfache Weise ein Deflickern der auf den Eingangsbildern der Bildsequenz teilweise nicht sichtbaren flackernden Lichtinformation L erreicht.

Das Verfahren basiert prinzipiell auf dem Prinzip der Bewegungsschätzung zwischen dem letzten Ausgangsbild und dem nachfolgenden neuen Eingangsbild. Die Bewegungskompensation überführt dann das letzte Ausgangsbild in den Zeitrahmen des nachfolgenden Eingangsbildes. Diese Bewegungskompensation kann direkt in die Bewegungsschätzung mit integriert werden oder bei dem Schritt des Mischens gleichzeitig mit erfolgen. Sie kann aber auch als separater Schritt ausgeführt werden.

Die Bewegungsschätzung und Bewegungskompensation kann für ganze Pel bzw. Pixel oder mit einer Genauigkeit von Teil-Pixeln (Halb-Pel oder Viertel-Pel) durchgeführt werden. Die Bildqualität durch Berücksichtigung von Teil-Pixeln bei der Bewegungsschätzung und Bewegungskompensation ist besser als bei Voll-Pel-Verfahren.

Das Mischen kann durch direkte Interpolation oder mit Wichtungsfaktoren gefiltert erfolgen. Dabei kann das Mischen für die Luminanz- und Chrominanz-Pixel gleich oder bevorzugt unterschiedlich erfolgen. Wenn die Luminanz-Pixel des Eingangsbildes einen größeren Helligkeitswert als die entsprechenden Luminanz-Pixel im bewegungskompensierten Zwischenbild Bᵢ sind, kann auch ein Ausgangsbild nur den Luminanzwert des Eingangsbildes enthalten, ohne dass die entsprechende Luminanz-Information aus dem bewegungskompensierten Zwischenbild Bᵢ hinzugemischt wird.

Andernfalls ist es vorteilhaft, wenn die Luminanz-Bildinformation des bewegungskompensierten Zwischenbildes Bᵢ mit einem höheren Wichtungsfaktor gewichtet zu dem mit geringerem Wichtungsfaktor gewichteten entsprechenden Bilddatum des zeitlich versetzten Eingangsbildes Eᵢ₊₁ z.B. durch Addition gemischt wird. Dies führt zu einem IIR-Tiefpassfilter erster Ordnung.

Für die Chrominanz-Pixel ist es vorteilhaft, wenn die zugehörigen Chrominanz-Pixel des bewegungsgeschätzten Zwischenbildes Bᵢ₊₁ mit dem zugehörigen Eingangsbild Eᵢ₊₁ gewichtet vermischt werden. Die Differenz der Wichtungsfaktoren sollte hier geringer als bei der Mischung der Luminanz-Pixel sein, um Artefakte zu verringern.

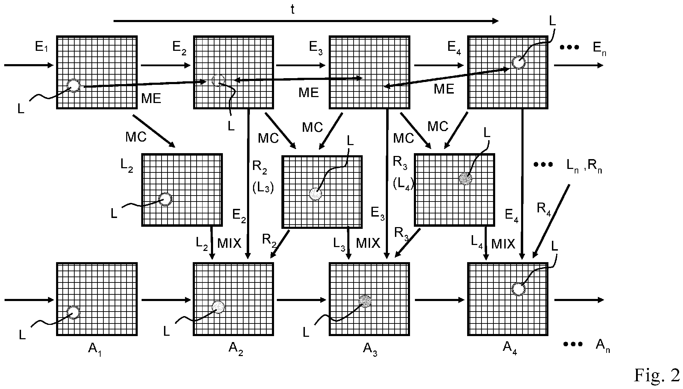

Figur 2 zeigt eine Skizze einer ersten Ausführungsform des Verfahrens zur Wiedergabe von Bildsequenzen mit flackernden Lichtinformationen L. Dabei werden drei zeitlich aufeinander folgende Eingangsbilder Eᵢ₋₁; Eᵢ, Eᵢ₊₁ zur Generierung eines zugehörigen Ausgangsbildes Aᵢ genutzt. Es erfolgt eine Vorwärtsschätzung von dem zeitlich vorhergehenden Eingangsbild Eᵢ₋₁ zum zeitlich nachfolgenden Eingangsbild Eᵢ und eine Rückwärtsschätzung von dem zeitlich nachfolgenden Eingangsbild Eᵢ₊₁ zum zeitlich vorhergehenden Eingangsbild Eᵢ. Mit dieser bidirektionalen Bewegungsschätzung werden somit für jedes Bilddatum zwei Bewegungsvektoren einmal für die Vorwärtsschätzung FW und einmal für die Rückwärtsschätzung BW ermittelt. Damit erfolgt eine Bewegungskompensation des zeitlich vorhergehenden Bildes Eᵢ₋₁ mit dem Vorwärts-Bewegungsvektor FW und dem negativen Rückwärts-Bewegungsvektor BW in den Zeitrahmen des mittleren Eingangsbildes Eᵢ. Zudem erfolgt eine Bewegungskompensation des zeitlich nachfolgenden Bildes Eᵢ₊₁ mit dem Rückwärts-Bewegungsvektor BW und dem negativen Vorwärts-Bewegungsvektor FW in den Zeitrahmen des mittleren Eingangsbildes Eᵢ. Diese bewegungskompensierten Zwischenbilder Lᵢ, Rᵢ aus dem zeitlich vorhergehenden und zeitlich nachfolgenden Eingangsbild Eᵢ₋₁, Eᵢ₊₁ werden dann mit dem mittleren Eingangsbild Eᵢ gemischt, um aus diesen drei Bildern ein Ausgangsbilder Aᵢ zu ermitteln.

Wiederum kann die Bewegungskompensation unmittelbar zusammen mit der Bewegungsschätzung oder unmittelbar im Schritt des Mischens erfolgen, sodass nicht zwingend ein vollständiges Zwischenbild Lᵢ, Rᵢ erzeugt und abgespeichert werden muss. Diese Zwischenbilder Lᵢ, Rᵢ können auch als eine Art virtuelle Bilder beim Schritt der Bewegungsschätzung oder des Mischens verwendet werden. Auch hier können für die Bewegungsschätzung und Bewegungskompensation volle Pixel (Full-Pel) oder Teil-Pixel (z.B. Half-Pel, Quarter-Pel) benutzt werden.

Das Mischen erfolgt mittels einer Filterung, bei der für die Luminanz-Pixel der entsprechende Ausgangs-Bildpixel als Mittelwert des Maximalwertes des linken und rechten Zwischenbildes Lᵢ, Rᵢ und des Eingangsbildes Eᵢ und des Median der Pixel dieser Bilder genutzt wird. Denkbar ist dabei auch, dass der Median aus den Zwischenbildern für die Vorwärtskompensation und Rückwärtskompensation getrennt berechnet wird.

Für die Chrominanz-Pixel kann einfach nur der Mittelwert der entsprechenden Pixel aus den Zwischenbildern Lᵢ, Rᵢ und dem entsprechenden Eingangsbild Eᵢ berechnet werden.

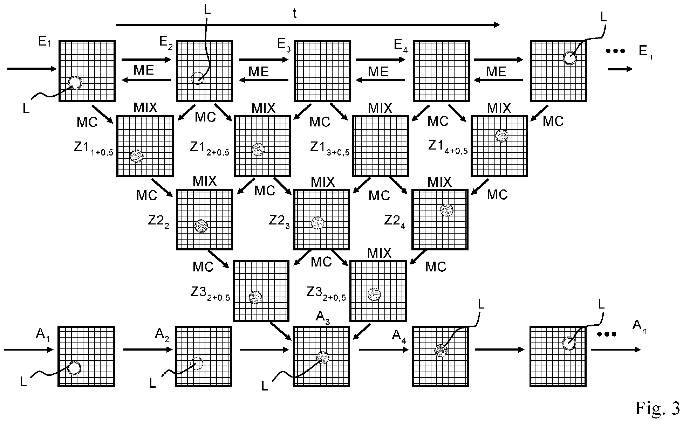

Figur 3 lässt eine Skizze einer zweiten Ausführungsform des Verfahrens zur Wiedergabe von Bildsequenzen mit flackernden Lichtinformationen erkennen. Hierbei wird eine rekursive Anwendung einer bewegungskompensierten Interpolation in mehreren Stufen vorgeschlagen. Dargestellt sind drei Zwischenstufen, wobei auch eine andere Anzahl von zwei, vier, fünf oder mehr Zwischenstufen denkbar ist. Je mehr Zwischenstufen vorhanden sind, desto größer ist die Komplexität des Verfahrens.

Im Prinzip wird hierbei aus zwei zeitlich aufeinander folgenden Eingangsbildern Eᵢ Eᵢ₊₁ nach einer Bewegungsschätzung zwischen diesen Eingangsbildern Eᵢ, Eᵢ₊₁ und einer Bewegungskompensation ein Zwischenbild Z1_{i+0,5} erzeugt. Die Bewegungsschätzung erfolgt als Vorwärtsschätzung vom vorhergehenden Eingangsbild Eᵢ zum nachfolgenden Eingangsbild Eᵢ₊₁ und durch Rückwärtsschätzung vom nachfolgenden Eingangsbild Eᵢ₊₁ zum vorhergehenden Eingangsbild Eᵢ. Mit den so ermittelten Bewegungsvektoren werden diese Eingangsbilder Eᵢ, Eᵢ₊₁ dann in den Zeitrahmen des Zwischenbildes Z_{i+0,5} transformiert und dabei die bewegungskompensierten Bildinformationen aus den beiden Eingangsbildern Eᵢ, Eᵢ₊₁ miteinander gemischt. Auch hier kann das Mischen für die Luminanz- und Chrominanz-Informationen unterschiedlich oder bevorzugt gleichermaßen erfolgen. Hier bietet sich eine Mittelwertbildung der Bilddaten aus den durch Vorwärtsschätzung generierten Zwischenbildern und Rückwärtsschätzung generierten Zwischenbildern an. Durch einen Medianfilter zur Mischung des Medians dieses Mittelwertes mit den entsprechenden Bildinformationen aus der Vorwärtskompensation und Rückwärtskompensation können Artefakte weiter reduziert werden. Es kann aber auch einfach der Median der Bildpixel zur Bildung der Zwischenbilder genutzt werden.

Denkbar sind aber auch gewichtete Verknüpfungen der zugehörigen Bilddaten (Pixel) aus den bewegungskompensierten Eingangsbildern Eᵢ, Eᵢ₊₁, wobei die Wichtungsfaktoren im einfachsten Fall 1 betragen.

Die in der ersten Stufe so ermittelten Zwischenbilder Z1_{i+0,5} werden dann wiederum miteinander vermischt. Dabei werden zwei zeitlich aufeinander folgende Zwischenbilder Z_{i+0,5} und Z_{i+1,5} wiederum anhand der vorher bestimmten Bewegungsvektoren oder nach einer weiteren Bewegungsschätzung miteinander vermischt. Dies wird in mehreren Stufen wiederholt, um ein Ausgangsbild Aᵢ zu generieren.

Die Zwischenbilder Zᵢ₊ₖ mit k = 0,5, 1,5, ... können bereits als Ausgangsbilder zur Darstellung genutzt oder zur Generierung eines endgültigen Ausgangsbildes Aᵢ eingesetzt werden. Die Zwischenbilder stellen somit bereits Quasi-Ausgangsbilder dar.

Die Bewegungsschätzung kann wiederum mit Voll-Pixeln (Full-Pel) oder mit Teil-Pixeln durchgeführt werden.

Die Interpolation kann in einzelnen Stufen gleich erfolgen. Denkbar ist aber auch eine unterschiedliche Behandlung der geraden und ungeraden Stufen, wobei in den geraden Stufen einschließlich der ersten Stufe eine Vorwärts- und Rückwärts-Bewegungsschätzung und -kompensation und in den ungeraden Stufen eine Vorwärtskompensation vom zeitlich vorhergehenden zum aktuellen und eine Rückwärtskompensation vom zeitlich nachfolgenden in das aktuelle Bild erfolgt. Die Bewegungsschätzung wird dann zum zeitlich zwischenliegenden Bild in Bezug auf das aktuelle Bild im Teil-Pixel-Verfahren durchgeführt.

Die Bewegungsschätzung erfolgt für all die vorgenannten Verfahren vorzugsweise mit der Luminanz-Komponente von zwei zeitlich aufeinander folgenden Bildern (Bildrahmen) einer Bildsequenz (Videosequenz). Eines dieser Bilder ist dann das Referenzbild und das andere das Suchbild. Für den Bildschätz-Algorithmus ist es nicht wichtig, ob das Referenzbild das zeitlich vorhergehende und das Suchbild das zeitlich spätere Bild ist oder umgekehrt. Die Reihenfolge muss nur über die gesamte Bildsequenz beibehalten werden. Das Referenzbild wird für die Bewegungsschätzung in der Regel in rechteckige Blöcke von Pixeln aufgeteilt. Die Blockgröße ist ein wesentlicher Parameter des Bewegungsschätzungsverfahrens. Die Blockgröße kann bspw. als zu 16x16 Pixeln gewählt werden.

Mit der Bewegungsschätzung wird für jeden Pixelblock im Referenzbild ein Bewegungsvektor bestimmt. Dieser Bewegungsvektor zeigt auf eine Position in dem Suchbild, das mit dem Referenzblock am besten übereinstimmt und damit der Bewegungsrichtung folgt. Die Koordinaten der Bewegungsvektoren sind relativ zur Position des Referenzblockes.

Die Bewegungsvektoren werden in einer Suchstrategie aus einer Anzahl von Kandidatenvektoren ermittelt. Hierzu kann für die Kandidatenvektoren somit die absoluten Differenzen zwischen dem Referenzblock und dem Suchblock berechnet und gegebenenfalls noch ein kandidatenspezifischer Faktor zur Berechnung eines Kostenfaktors der Kandidaten addiert werden. Der Kandidatenvektor mit den geringsten Kosten (Abweichung) wird dann als der optimale Bewegungsvektor für den jeweiligen Block ausgewählt.

Um die Summe der absoluten Differenzen eines Blockes zu berechnen, wird ein Block aus dem Suchbild an der durch den angenommenen Kandidatenvektor bezeichneten Position ausgelesen. Hierbei kann unter Umständen auch eine bilineare Interpolation genutzt werden, um einen Suchblock aus dem Suchblockbild zu berechnen. Es wird dann die Summe der absoluten Differenzen zwischen den Pixeln des Referenzblockes und des Suchblockes berechnet.

Die Berechnung der Bewegungsvektoren kann durchgeführt werden, indem die Blöcke in einer mäanderförmigen Ordnung untersucht werden. Hierbei werden die Blöcke zunächst von links nach rechts in einer Bildmatrixzeile und dann die untereinanderliegenden Spalten der Bildmatrix untersucht.

Die Kandidatenvektoren können auf unterschiedliche Weise bestimmt werden. So können die Vektoren für bereits in der Nähe als geeignet erkannte Bewegungsvektoren ermittelte Vektoren genutzt werden. Es können auch die Bewegungsvektoren aus der Nachbarschaft des aktuellen Blockes als Kandidatenvektoren angenommen werden, die für den vorhergehenden Bildrahmen der Bildsequenz als optimaler Bewegungsvektor ermittelt wurden. Das im vorhergehenden Schritt ermittelte Bewegungsvektorfeld muss hierzu zwischengespeichert werden. Kandidatenvektoren können aber auch aus den für Nachbarblöcke ermittelten Bewegungsvektoren unter Addition eines pseudo-zufälligen Offsets ermittelt werden.

Ein Kandidatenvektor kann auch ein Null-Vektor sein, bei dem keine Verschiebung des Bildblockes angenommen wird.

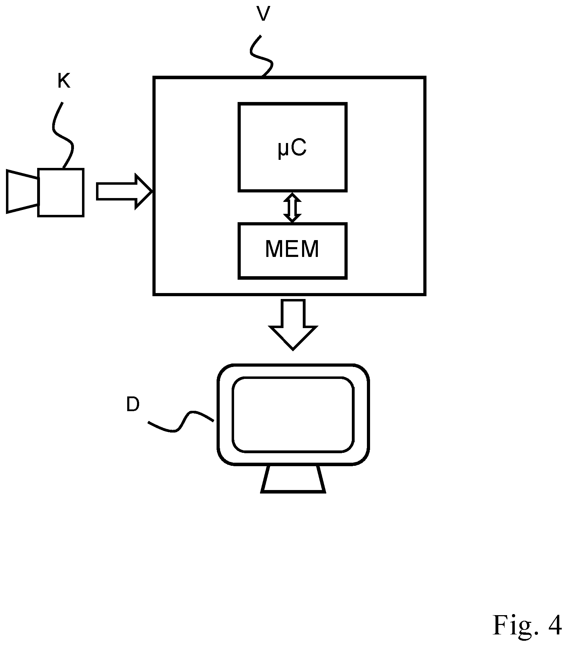

Figur 4 zeigt eine Skizze einer Bildverarbeitungseinheit V mit einer Datenverarbeitungseinheit µC und einem Datenspeicher MEM zum Abspeichern von Bilddaten. Die Datenverarbeitungseinheit ist bspw. ein geeignet programmierter Mikroprozessor, ein spezialisierter Bildverarbeitungsprozessor, ein FPGA (Field Programmable Gate Array), ein ASIC (anwenderspezifischer integrierter Schaltkreis) oder ähnliches. Die Datenverarbeitungseinheit µC greift lesend und schreibend auf den Datenspeicher MEM zu. Dieser kann fragmentiert sein oder aus mehreren Speichereinheiten bestehen.

Eingangsbilddaten einer Bildsequenz werden von einer Kamera K aufgenommen, die direkt oder indirekt mit der Bildverarbeitungseinheit V verbunden ist. Die Eingangsbilddaten der Bildsequenz können dann im Datenspeicher MEM zwischengespeichert werden.

Nach der Verarbeitung dieser Eingangsdaten in der oben beschriebenen Weise durch die Datenverarbeitungseinheit µC werden die Ausgangsbilder dann an einen Bildschirm (Display D) zur Wiedergabe übertragen. Dieser Bildschirm D ist direkt oder indirekt mit der Bildverarbeitungseinheit V verbunden.

Denkbar ist aber auch, dass der Ausgangsbilddatenstrom auf einem geeigneten Datenträger abgespeichert oder über eine Datenfernverbindung weiter übertragen wird.

Die Bildverarbeitungseinheit V ist vorzugsweise in einem Kraftfahrzeug integriert. Die Kamera K und das Display D ersetzen dabei herkömmliche Rückspiegel oder ergänzen diese. Die Kamera K ist dabei auf das zu beobachtende Blickfeld ausgerichtet und das Display D im geeigneten Blickraum des Fahrers angeordnet.

## Patentansprüche

1. Verfahren zur Wiedergabe von Bildsequenzen mit flackernden Lichtinformationen (L) mit einer Datenverarbeitungseinheit (µC) durch Zugriff auf Bilddateien, die in einem Datenspeicher (MEM) abgespeichert sind, wobei eine Bildsequenz eine Folge von Eingangsbildern Eᵢ einer zeitlich hintereinander erfassten Bildszene umfasst, mit den Schritten:
- Schätzen (ME) von Bewegungsvektoren für Bilddaten eines Eingangsbildes Eᵢ zur Beschreibung der räumlichen Verschiebung eines Bilddatums in einem ersten Eingangsbild Eᵢ zu demselben Bilddatum in einem zeitlich versetzten vorhergehenden dritten Eingangsbild Eᵢ₋₁ und einem zeitlich versetzten nachfolgenden zweiten Eingangsbild Eᵢ₊₁, wobei jeweils eine Vorwärtsschätzung von dem zeitlich vorhergehenden Eingangsbild Eᵢ₋₁; Eᵢ zu dem zeitlich nachfolgenden Eingangsbild Eᵢ; Eᵢ₊₁ und jeweils eine Rückwärtsschätzung von dem zeitlich nachfolgenden Eingangsbild Eᵢ₊₁; Eᵢ zu dem zeitlich vorhergehenden Eingangsbild Eᵢ; Eᵢ₋₁₁ erfolgt, um für jedes Bilddatum zwei Bewegungsvektoren einmal für die Vorwärtsschätzung FW und einmal für die Rückwärtsschätzung BW zu ermitteln,
**gekennzeichnet durch**
- Erzeugen bewegungskompensierter Zwischenbilder Lᵢ, Rᵢ in dem Zeitrahmen des ersten Eingangsbildes Eᵢ, wobei ein linkes Zwischenbild Lᵢ jeweils aus dem zeitlich vorhergehenden dritten Eingangsbild Eᵢ₋₁ mit den zugehörigen ermittelten Bewegungsvektoren für die Vorwärtsschätzung und dem negativen Bewegungsvektor für die Rückwärtsschätzung und ein rechtes Zwischenbild Rᵢ aus dem zeitlich nachfolgenden zweiten Eingangsbild Eᵢ₊₁ mit den zugehörigen ermittelten Bewegungsvektoren für die Vorwärtsschätzung und dem negativen Bewegungsvektor für die Rückwärtsschätzung erzeugt werden,
- Generieren (MIX) eines Ausgangsbildes Aᵢ durch Mischen der Bilddaten des ersten Eingangsbildes Eᵢ mit den Bilddaten des linken und rechten Zwischenbildes Lᵢ, Rᵢ, wobei für die Luminanz-Pixel die entsprechenden Ausgangs-Bildpixel als Mittelwert des Maximalwertes der Zwischenbilder Lᵢ, Rᵢ und des ersten Eingangsbildes Eᵢ und des Median der Pixel dieser Bilder durch Berechnung des Mittelwertes des Maximalwertes und des Medians genutzt werden.

2. Verfahren nach Anspruch 1, **dadurch gekennzeichnet, dass** für die Chrominanz-Pixel die entsprechenden Ausgangs-Bildpixel als Mittelwert der entsprechenden Pixel aus den Zwischenbildern Lᵢ, Rᵢ und dem ersten Eingangsbild Eᵢ berechnet werden.

3. Verfahren nach Anspruch 1 oder 2, **dadurch gekennzeichnet, dass** die Bilddaten, für die Bewegungsvektoren geschätzt werden, Bildblöcke in einem Bild sind.

4. Verfahren nach einer der vorhergehenden Ansprüche, **dadurch gekennzeichnet, dass** das Verfahren durch eine Bildverarbeitungseinheit ausgeführt wird, die in ein Kraftfahrzeug integriert ist und die Bildsequenz eine von einer in das Kraftfahrzeug integrierten Kamera, die Bestandteil der Bildverarbeitungseinheit ist oder an die Bildverarbeitungseinheit angeschlossen ist, erzeugte Bildsequenz ist.

5. Verfahren nach einem der vorhergehenden Ansprüche, **dadurch gekennzeichnet, dass** die flackernden Lichtinformationen durch von Leuchtdioden emittiertes Licht hervorgerufene flackernde Lichtinformationen sind.

6. Bildverarbeitungseinheit mit Datenspeicher zum Abspeichern von Bilddaten und mit einer Datenverarbeitungseinheit, **dadurch gekennzeichnet, dass** die Datenverarbeitungseinheit zur Durchführung des Verfahrens nach einem der vorhergehenden Ansprüche durch Zugriff auf in dem Datenspeicher abgespeicherte Bilddaten eingerichtet ist.

7. Bildverarbeitungseinheit nach Anspruch 6, **dadurch gekennzeichnet, dass** die Bildverarbeitungseinheit und/oder eine Kamera, die Bestandteil der Bildverarbeitungseinheit ist oder an die Bildverarbeitungseinheit angeschlossen ist, in einem Kraftfahrzeug integriert ist.

8. Computerprogramm mit Programmcodemitteln, die zur Durchführung des Verfahrens nach einem der Ansprüche 1 bis 5 eingerichtet sind, wenn das Computerprogramm mit einer Datenverarbeitungseinheit ausgeführt wird.

## Claims

1. A method for reproducing image sequences with flickering light information (L) with a data processing unit (µC) by accessing image files stored in a data memory (MEM), wherein an image sequence comprises a sequence of input images Eᵢ of an image scene captured one after the other in time, comprising the steps:
- estimating (ME) motion vectors for image data of an input image Eᵢ to describe the spatial displacement of an image datum in a first input image Eᵢ to the same image datum in a temporally offset preceding third input image Eᵢ₋₁ and a temporally offset subsequent second input image Eᵢ₊₁, wherein a forward estimation is carried out in each case from the temporally preceding input image Eᵢ₋₁; Eᵢ to the temporally subsequent input image Eᵢ; Eᵢ₊₁ and a backward estimation is carried out in each case from the temporally subsequent input image Eᵢ₊₁; Eᵢ to the temporally preceding input image Eᵢ; Eᵢ₋₁₁, in order to determine two motion vectors for each image datum, once for the forward estimation FW and once for the backward estimation BW,
**characterized by**
- generating motion-compensated intermediate images Lᵢ, Rᵢ in the time frame of the first input image Eᵢ, wherein a left intermediate image Lᵢ is generated from the temporally preceding third input image Eᵢ₋₁ with the associated motion vectors determined for the forward estimation and the negative motion vector for the backward estimation, and a right intermediate image Rᵢ is generated from the temporally subsequent second input image Eᵢ₊₁ with the associated motion vectors determined for the forward estimation and the negative motion vector for the backward estimation,
- generating (MIX) an output image Aᵢ by mixing the image data of the first input image Eᵢ with the image data of the left and right intermediate images Lᵢ, Rᵢ, wherein, for the luminance pixels, the corresponding output image pixels are used as the mean value of the maximum value of the intermediate images Lᵢ, Rᵢ and the first input image Eᵢ and the median of the pixels of these images by calculating the mean of the maximum value and the median.

2. The method according to claim 1, **characterized in that**, for the chrominance pixels, the corresponding output image pixels are calculated as the mean value of the corresponding pixels from the intermediate images Lᵢ, Rᵢ and the first input image Eᵢ.

3. The method according to claim 1 or 2, **characterized in that** the image data for which motion vectors are estimated are image blocks in an image.

4. The method according to any one of the preceding claims, **characterized in that** the method is carried out by an image processing unit which is integrated in a motor vehicle and the image sequence is an image sequence generated by a camera integrated in the motor vehicle which is a component of the image processing unit or is connected to the image processing unit.

5. The method according to any one of the preceding claims, **characterized in that** the flickering light information is flickering light information caused by light emitted by light-emitting diodes.

6. An image processing unit with a data memory for storing image data and with a data processing unit, **characterized in that** the data processing unit is set up to carry out the method according to any one of the preceding claims by accessing image data stored in the data memory.

7. The image processing unit according to claim 6, **characterized in that** the image processing unit and/or a camera which is a component of the image processing unit or is connected to the image processing unit is integrated in a motor vehicle.

8. A computer program with program code means which are configured to carry out the method according to any one of claims 1 to 5 when the computer program is executed by a data processing unit.

## Revendications

1. Procédé de reproduction de séquences d'images avec des informations lumineuses scintillantes (L) avec une unité de traitement de données (µC) en accédant à des fichiers d'images, qui sont sauvegardés dans une mémoire de données (MEM), dans lequel une séquence d'images comprend une séquence d'images d'entrée Eᵢ d'une scène d'images capturées successivement dans le temps, avec les étapes :
- d'estimation (ME) de vecteurs de mouvement pour des données d'image d'une image d'entrée Eᵢ pour décrire le décalage spatial d'une date d'image dans une première image d'entrée Eᵢ par rapport à la même date d'image dans une troisième image d'entrée précédente Eᵢ₋₁ décalée dans le temps et une deuxième image d'entrée suivante Eᵢ₊₁ décalée dans le temps, dans lequel sont effectuées respectivement une estimation anticipée de l'image d'entrée précédente Eᵢ₋₁ ; Eᵢ dans le temps par rapport à l'image d'entrée Eᵢ ; E ᵢ₊₁ qui suit dans le temps et respectivement une estimation par rétrospection de l'image d'entrée Eᵢ₊₁ ; Eᵢ qui suit dans le temps par rapport à l'image d'entrée précédente Eᵢ ; Eᵢ₋₁₁ dans le temps pour déterminer pour chaque date d'image deux vecteurs de mouvement une fois pour l'estimation anticipée FW et une fois pour l'estimation par rétrospection BW,
**caractérisé par**
- la génération d'images intermédiaires Lᵢ, Rᵢ à compensation de mouvement dans la plage de temps de la première image d'entrée Eᵢ, dans lequel respectivement une image intermédiaire gauche Lᵢ est générée à partir de la troisième image d'entrée Eᵢ₋₁ qui précède dans le temps avec les vecteurs de mouvement déterminés associés pour l'estimation anticipée et le vecteur de mouvement négatif pour l'estimation par rétrospection et une image intermédiaire droite Rᵢ est générée à partir de la deuxième image d'entrée Eᵢ₊₁ qui suit dans le temps avec les vecteurs de mouvement déterminés associés pour l'estimation anticipée et le vecteur de mouvement négatif pour l'estimation par rétrospection,
- la génération (MIX) d'une image de sortie Aᵢ en mélangeant les données d'image de la première image d'entrée Eᵢ aux données d'image des images intermédiaires gauche et droite Lᵢ, Rᵢ, dans lequel les pixels d'image de sortie correspondants sont utilisés pour les pixels de luminance comme valeur moyenne de la valeur maximale des images intermédiaires Lᵢ, Rᵢ et de la première image d'entrée Eᵢ et de la médiane des pixels de ces images en calculant la valeur moyenne de la valeur maximale et de la médiane.

2. Procédé selon la revendication 1, **caractérisé en ce que**, pour les pixels de chrominance, les pixels d'image de sortie correspondants sont calculés comme valeur moyenne des pixels correspondants à partir des images intermédiaires Lᵢ, Rᵢ et de la première image d'entrée Eᵢ.

3. Procédé selon la revendication 1 ou 2, **caractérisé en ce que** les données d'image pour lesquelles des vecteurs de mouvement sont estimés sont des blocs d'image dans une image.

4. Procédé selon l'une quelconque des revendications précédentes, **caractérisé en ce que** le procédé est exécuté par une unité de traitement d'images qui est intégrée dans un véhicule à moteur et la séquence d'images est une séquence d'images générée par une caméra intégrée dans le véhicule à moteur, qui fait partie intégrante de l'unité de traitement d'images ou qui est raccordée à l'unité de traitement d'images.

5. Procédé selon l'une quelconque des revendications précédentes, **caractérisé en ce que** les informations lumineuses scintillantes sont des informations lumineuses scintillantes provoquées par une lumière émise par des diodes électroluminescentes.

6. Unité de traitement d'images avec une mémoire de données pour sauvegarder des données d'images et avec une unité de traitement de données, **caractérisée en ce que** l'unité de traitement de données est mise au point pour mettre en œuvre le procédé selon l'une quelconque des revendications précédentes en accédant à des données d'images sauvegardées dans la mémoire de données.

7. Unité de traitement d'images selon la revendication 6, **caractérisée en ce que** l'unité de traitement d'images et/ou une caméra, qui fait partie intégrante de l'unité de traitement d'images ou qui est raccordée à l'unité de traitement d'images, sont intégrées dans un véhicule à moteur.

8. Programme informatique avec des moyens de code de programme qui sont mis au point pour mettre en œuvre le procédé selon l'une quelconque des revendications 1 à 5 lorsque le programme informatique est exécuté avec une unité de traitement de données.
